# EUROPÄISCHE PATENTSCHRIFT

(11) **EP 1 242 187 B1**
(45) Veröffentlichungstag und Bekanntmachung des Hinweises auf die Patenterteilung: **16.06.2004**
(21) Anmeldenummer: 01909502.5
(22) Anmeldetag: 17.01.2001
(51) Int. Cl.: B01L 3/00, G02B 21/34, G01N 1/31

(54) **KONTAKTIERUNGSVORRICHTUNG**
CONTACTING DEVICE
DISPOSITIF DE MISE EN CONTACT

(30) Priorität: 19.01.2000 DE 10002920
(43) Veröffentlichungstag der Anmeldung: 25.09.2002
(73) Patentinhaber: Epigenomics AG, 10435 Berlin (DE)
(72) Erfinder: HOWE, André, 13189 Berlin (DE)
(74) Vertreter: Schubert, Klemens, Dr.
(86) Internationale Anmeldenummer: PCT/DE2001/000236
(87) Internationale Veröffentlichungsnummer: WO 2001/052987

(56) Entgegenhaltungen:
- WO-A-00/63670
- DE-C- 19 610 146
- US-A- 5 278 048
- US-A- 5 945 334

## Beschreibung

Die Erfindung betrifft eine Vorrichtung zur Kontaktierung von auf einer Oberfläche immobilisierten biologischen Stoffen mit einer Lösung von biologischen Stoffen.

Hybridisierungen von Proben-DNA auf Oligomer Chips, beispielsweise Oligonukleotid-Arrays, werden zum Nachweis bestimmter Sequenzen in der Proben-DNA durchgeführt. Ein möglicher Ansatz, "Sequencing by hybidisation (SBH)", ermittelt dabei sogar die vollständige Sequenz der Proben-DNA oder zumindest großer Teile davon. Allelspezifische Hybridisierungen werden jedoch auch ausgeführt, um bestimmte Veränderungen in der Proben-DNA, z. B. Punktmutationen, nachzuweisen. Die vorliegende Erfindung dient zur sequentiellen Durchführung einer grossen Zahl von deratigen Experimenten, wobei besonderer Wert auf eine kontaminationsfreie Arbeit gelegt wird.

Hybridisierungskammern werden inzwischen von verschiedenen Firmen kommerziell angeboten, sind aber in der Regel nicht separat temperierbar. Hybridisierungskammern, auch für die Aufnahme von Objektträgern geeignet, werden so z. B. von der Firma GeneMachines, CA, USA und von der Firma Telechem vertrieben.

Die Firma Genetic Solutions hat auch pneumatisch ansteuerbare und temperierbare Hybridisierungskammern im Angebot, bei denen die Hybridisierungseigenschaften durch die Bewegung der Hybridisierungsflüssigkeit verbessert sein sollen.

Im Stand der Technik sind eine Reihe von Hybridisierungskammern bekannt. So beschreiben die US-A 5,100,775, US-A 5,360,741 oder US-A 5,466,603 Hybridisierungskammern, welche für die unterschiedlichsten Zwecke und Bedürfnisse angepaßt sind. Derartige Hybridisierungskammern werden inzwischen vielfach kommerziell angeboten, sind aber im Allgemeinen nicht separat temperierbar. Auch sind für die Aufnahme von Objektträgern geeignete Hybridisierungskammern bekannt. Weiterhin gibt es an den Rändern selbstklebende Folien, die durch das Aufkleben auf Objektträger Hybridisierungskammern bilden können. Bekannt ist auch eine pneumatisch ansteuerbare und temperierbare Hybridisierungskammer, bei der die Hybridisierungseigenschaften durch die Bewegung der Hybridisierungsflüssigkeit verbessert sein sollen.

Die US-A-5278048 offenbart eine Vorrichtung zur Kontaktierung von auf einer Oberfläche immobilisierten, biologischen Stoffen mit einer Lösung von biologischen Stoffen. Die Vorrichtung weist eine Kammer auf, weiche zur Aufnahme der biologischen Stoffe und der Lösung dient und deren Unterseite von der Oberfläche, deren Oberseite von einem Deckel und deren Seitenwände von einer Dichtung gebildet werden. Der mehrteilige Deckel kann z.B. zu Reinigungszwekken entfernt werden. Ein erster Deckelteil umfasst Bohrungen zum Einbringen der Lösung, die Kontaktfläche zur Kammer sowie eine Nut zur Aufnahme der Dichtung. Ein zweiter Deckelteil dient zur Aufnahme und Arretierung des ersten Deckelteils. Die bislang erhältlichen Kammern haben jedoch den Nachteil, dass Bodenteil, Dichtung und Deckel durch Schrauben zusammengehalten werden, was die Reinigung zwischen verschiedenen Experimenten erschwert. Aufgabe der vorliegenden Erfindung ist die Schaffung einer Vorrichtung zur Kontaktierung immobilisierter biologischer Stoffe mit Lösungen biologischer Stoffe, die beliebig oft wiederverwendbar ist und die Problematik der Kontamination des Folgeexperiments durch Bestandteile des vorangehenden Experimentes dadurch löst, dass ausschließlich leicht auswechselbare, einfach zu reinigende Bauteile mit der Lösung in Kontakt kommen. Gegenstand der Erfindung ist eine Vorrichtung zur Kontaktierung von auf einer Oberfläche 5 immobilisierten biologischen Stoffen mit einer Lösung von biologischen Stoffen umfassend eine Kammer zur Aufnahme dieser Lösung, deren Unterseite von der Oberfläche 5 und deren Oberfläche einem Deckel 3 und deren Seitenwände von einer Dichtung 6 gebildet werden, dadurch gekennzeichnet, dass der Deckel 3 aufklappbar und in geschlossener Form arretierbar ist und aus zwei Teilen besteht, von denen der Erste ohne zusätzliche Hilfsmittel austauschbar ist, Bohrungen zum Einbringen der Lösung enthält und die Kontaktfläche zur Kammer sowie eine Nut zur Aufnahme der Dichtung 6 umfasst, und der Zweite zur Aufnahme und Arretierung des ersten Teils dient und zudem Federn 10 enthält, die den Anpressdruck des ersten Teils auf die Dichtung 6 regulieren.

In einer besonders bevorzugten Ausführung der erfindungsgemäßen Vorrichtung ist der Deckel aufklappbar und in geschlossener Position arretierbar.

Eine weitere bevorzugte Ausführung der erfindungsgemäßen Vorrichtung zeichnet sich dadurch aus, dass der erste, herausnehmbare Deckelteil Aussparungen und bevorzugt Bohrungen enthält, die zur Aufnahme der Federn des zweiten Deckelteiles dienen.

Bevorzugt erfolgt die Übertragung der Federkraft auf die Dichtung durch Druckstücke am zweiten Deckelteil, die durch Gummiring in den vorgenannten Bohrungen des ersten Deckelteils fixiert werden und die auf den ersten Deckelteil wirken.

Eine weitere bevorzugte Ausführungsform der erfindungsgemäßen Vorrichtung ist dadurch gekennzeichnet, dass der Anpressdruck des Deckels auf die Dichtung durch eine mechanische Barriere begrenzt ist.

Bevorzugt enthält der erste Teil des Deckels eine Kavität, die das Kammervolumen und die Form der Kammer definiert.

In einer weiteren besonders bevorzugten Variante enthält der Deckel der Vorrichtung Gewinde zum Anbringen von Leitungsverbindungen. Bevorzugt sind zum Einbringen und/oder zur Bewegung der Probe über die Oberfläche an dem Deckel Schlauchleitungen angebracht.

In einer besonders bevorzugten Ausführung ist die Kammer der Vorrichtung mittels einem oder mehrerer Peltierelemente temperierbar.

In einer weiteren besonders bevorzugten Ausführung ist die Oberfläche 5 aus Glas und bevorzugt ein Objektträger, wie er auch für Mikroskopiezwecke eingesetzt wird.

In weiteren besonders bevorzugten Ausführungen der erfindungsgemäßen Vorrichtung ist die Kammer rechteckig, oval oder sechseckig ausgestaltet.

In einer weiteren besonders bevorzugten Variante der erfindungsgemäßen Vorrichtung ist die Kammer oval und mit an den schmalen Seiten ausgebildeten Zuspitzungen ausgestaltet.

In einer insbesondere bevorzugten Variante der erfindungsgemäßen Vorrichtung ist die Kammer oval und mit an den schmalen Seiten ausgebildeten Ausbuchtungen ausgestaltet.

Die auf der Oberfläche 5 immobilisierten biologischen Stoffe und eine Anordnung von Oligonukleotiden, Peptide Nucleic Acids, modifizierten Oligonukleotiden oder Nukleinsäuren. Die verwendete Lösung von biologischen Stoffen enthält entsprechend bevorzugt Oligonukleotide, Peptide Nucleic Acids, modifizierte Oligonukleotide oder Nukleinsäuren.

Durch die erfindungsgemäße Ausgestaltung der Vorrichtungen kann die Form und Größe der Kontaktfläche zwischen immobilisierter Probe und der Lösung biologischer Stoffe individuell gewählt werden. Somit ist eine Anpassung der Kammer der Vorrichtung auf verschiedenste Probenformate möglich.

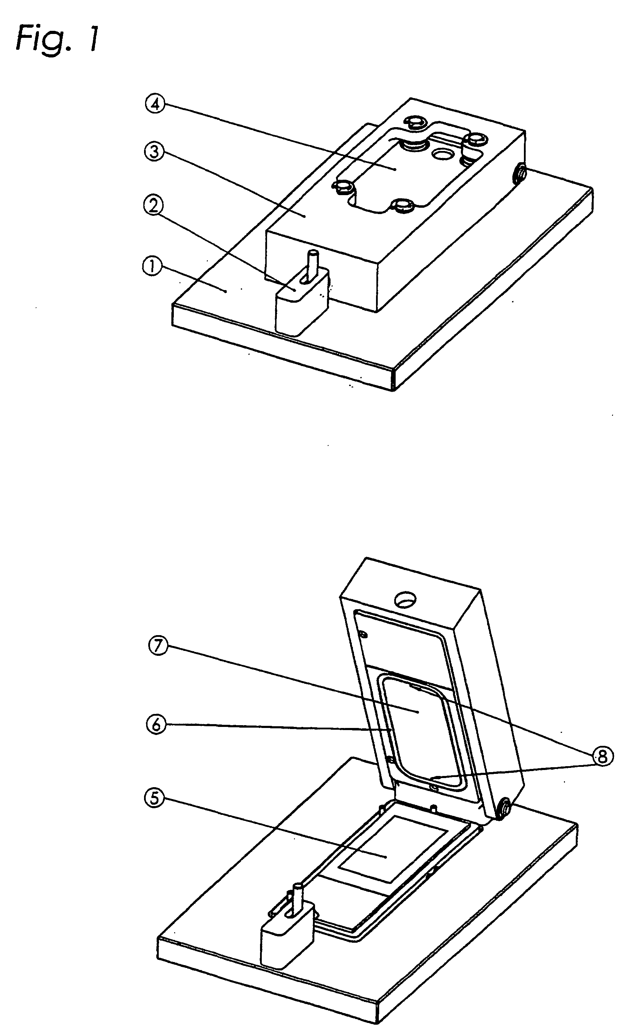

Fig. 1 bis Fig. 3 verdeutlichen die Erfindung.

Durch die Darstellung der aufgeklappten Vorrichtung in Figur 1 wird der Blick auf Oberfläche 5, die Dichtung 6, das Kammervolumen 7 und die Ein- und Auslassöffnungen 8 freigegeben.

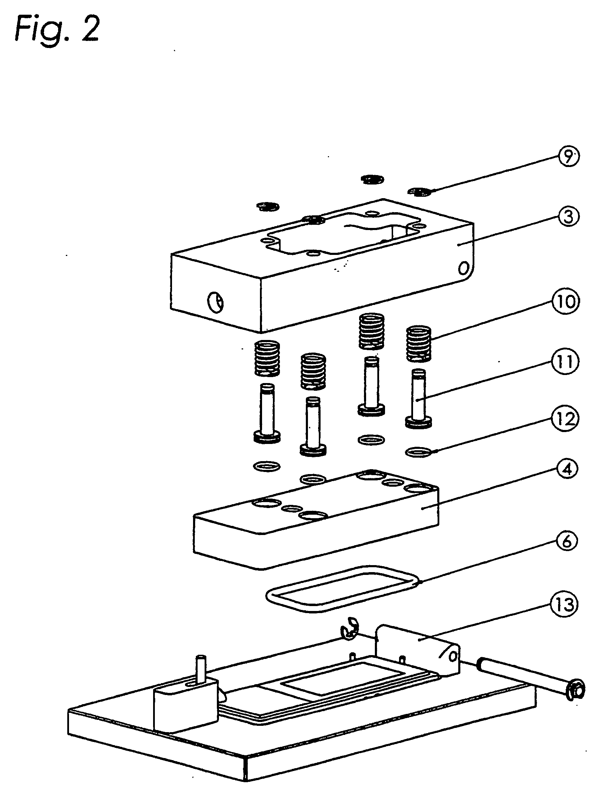

Figur 2 zeigt eine Ansicht der Vorrichtung, bei der die Bauteile des Deckels 3 separat dargestellt werden.

Die Anordnung der Stößel mit den Druckfedern über der Gummidichtung garantiert eine funktionssichere, reproduzierbare Abdichtung des Kammervolumens. Der Anpressdruck wird durch die 4 Federn erzeugt.

Der Einsatz wird durch 4 O-Ringe auf den Stößeln gehalten. Er fällt nicht durch sein Eigengewicht ab, kann aber mit leichtem Fingerdruck von hinten aus dem Deckel entfernt werden. Die Einsätze können nach jedem Experiment leicht separat gereinigt werden.

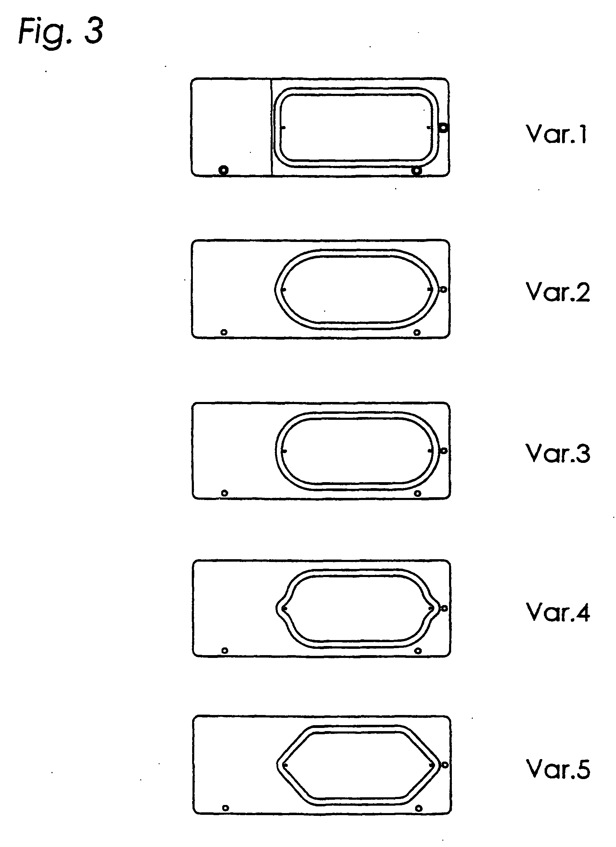

Figur 3 zeigt beispielhaft bevorzugte Ausführungsformen der erfindungsgemäßen Vorrichtung, bei welchen die Kammer unterschiedliche Form und/oder Größe besitzt. Es zeigen hierbei die Varianten 1 und 5 viereckig- und sechseckigrechteckige Ausgestaltungen der Kammer. Die Varianten 2 bis 3 verdeutlichen Ausführungsbeispiele, bei denen die Grundform der Kammer oval ist.

### Bezugszeichenliste

- 1: Grundplatte
- 2: Arretierungsvorrichtung
- 3: Deckel
- 4: Kammereinsatz
- 5: Oberfläche(Probenfläche)
- 6: Dichtung
- 7: Kammervolumen
- 8: Ein- und Auslassöffnung
- 9: Sicherungsscheibe
- 10: Feder
- 11: Druckstück
- 12: O-Ring
- 13: Scharnier

## Patentansprüche

1. Vorrichtung zur Kontaktierung von auf einer Oberfläche (5) immobilisierten biologischen Stoffen mit einer Lösung von biologischen Stoffen umfassend eine Kammer zur Aufnahme dieser Lösung, deren Unterseite von der Oberfläche (5) und deren Oberseite von einem Deckel (3) und deren Seitenwände von einer Dichtung (6) gebildet werden, wobei der Deckel (3) aufklappbar und in geschlossener Form arretierbar ist und aus zwei Teilen besteht, von denen der Erste ohne zusätzliche Hilfsmittel austauschbar ist, Bohrungen zum Einbringen der Lösung enthält und die Kontaktfläche zur Kammer sowie eine Nut zur Aufnahme der Dichtung (6) umfasst, und der Zweite zur Aufnahme und Arretierung des ersten Teils dient und zudem Federn (10) enthält, die den Anpressdruck des ersten Teils auf die Dichtung (6) regulieren.

2. Vorrichtung nach Abspruch 1, **dadurch gekennzeichnet, dass** der erste, herausnehmbare Deckelteil Aussparungen und bevorzugt Bohrungen enthält, die zur Aufnahme der Federn (10) des zweiten Deckelteiles dienen.

3. Vorrichtung nach Anspruch 2, **dadurch gekennzeichnet, dass** Druckstücke (11) am zweiten Deckelteil vorgesehen sind, durch welche die Federkraft über den ersten Deckelteil auf die Dichtung (6) übertragen wird, durch Gummiringe in den Bohrungen des ersten Deckelteils fixiert werden.

4. Vorrichtung nach einem der vorangehenden Ansprüche **dadurch gekennzeichnet, dass** der Anpressdruck des Deckels (3) auf die Dichtung (6) durch eine mechanische Barriere begrenzt ist.

5. Vorrichtung nach einem der vorangehenden Ansprüche **dadurch gekennzeichnet, dass** der erste Teil des Deckels, (3) eine Kavität enthält, die das Kammervolumen (7) und die Form der Kammer definiert.

6. Vorrichtung nach einem der vorangehenden Ansprüche **dadurch gekennzeichnet, dass** der Deckel (3) Gewinde zum Anbringen von Leitungsverbindungen enthält.

7. Vorrichtung nach einem der vorangehenden Ansprüche, **dadurch gekennzeichnet, dass** Schlauchleitungen zum Einbringen und/oder zur Bewegung der Probe über die Oberfläche an dem Deckel (3) angebracht sind.

8. Vorrichtung nach einem der vorangehenden Ansprüche, **dadurch gekennzeichnet, dass** die Kammer mittels eines oder mehrerer Peltierelemente temperierbar ist.

9. Vorrichtung nach einem der vorangehenden Ansprüche, **dadurch gekennzeichnet, dass** die Oberfläche (5) aus Glas ist und bevorzugt ein Objektträger ist, wie er auch für Mikroskopiezwecke eingesetzt wird.

10. Vorrichtung nach Anspruch 1, **dadurch gekennzeichnet, dass** die Kammer rechteckig ausgestaltet ist.

11. Vorrichtung nach Anspruch 1, **dadurch gekennzeichnet, dass** die Kammer oval ausgestaltet ist.

12. Vorrichtung nach Anspruch 1, **dadurch gekennzeichnet, dass** die Kammer sechseckig ausgestaltet ist.

13. Vorrichtung nach Anspruch 1, **dadurch gekennzeichnet, dass** die Kammer oval und mit an den schmalen Seiten ausgebildeten Zuspitzungen ausgestaltet ist.

14. Vorrichtung nach Anspruch 1, **dadurch gekennzeichnet, dass** die Kammer oval und mit an den schmalen Seiten ausgebildeten Ausbuchtungen ausgestaltet ist.

## Claims

1. A device for the contacting of biological substances immobilized on a surface (5) with a solution of biological substances comprising a chamber for uptake of this solution, the under side of which is formed by surface (5) and the upper side of which is formed by a cover (3) and whose side walls are formed by a gasket (6) is hereby **characterized in that** cover (3) can be swung open and can be locked in the closed position and is comprised of two parts, the first of which can be exchanged without additional means, contains drilled holes for introducing the solution and contact surfaces for the chamber as well as a groove for the uptake of the gasket (6), and the second cover part serves for the uptake and locking of the first part and also contains springs (10), which regulate the pressure force of the first part on the gasket (6).

2. The device according to claim 1, **characterized in that** the first, removable cover part contains recesses and preferably drilled holes, which serve for the uptake of the springs (10) of the second cover part.

3. The device according to claim 2, **characterized in that** the pressure pieces (11) on the second cover part, by means of which the spring force is transferred to the gasket (6), are attached via rubber rings in the drilled holes of the first cover part.

4. The device according to one of the preceding claims, further **characterized in that** the pressure force of the cover (3) on the gasket (6) is limited by a mechanical barrier.

5. The device according to one of the preceding claims, further **characterized in that** the first part of the cover (3) contains a cavity, which defines the chamber volume (7) and the shape of the chamber.

6. The device according to one of the preceding claims, further **characterized in that** the cover (3) contains threads for introducing pipeline connections.

7. The device according to one of the preceding claims, further **characterized in that** flexible lines are introduced on the cover (3) for introducing and/or for moving the specimen over the surface.

8. The device according to one of the preceding claims, further **characterized in that** chamber can be temperature-controlled by means of one or more Peltier elements.

9. The device according to one of the preceding claims, further **characterized in that** the surface (5) is comprised of glass and is preferably a glass slide, as is also used for microscopy purposes.

10. The device according to claim 1, further **characterized in that** the chamber is configured as a rectangle.

11. The device according to claim 1, further **characterized in that** the chamber is configured as an oval.

12. The device according to claim 1, further **characterized in that** the chamber is configured as a hexagon.

13. The device according to claim 1, further **characterized in that** the chamber is configured as an oval with points formed on the narrow sides.

14. The device according to claim 1, further **characterized in that** the chamber is configured as an oval and with projections formed on the narrow sides.

## Revendications

1. Dispositif pour la mise en contact de substances biologiques immobilisées sur une surface (5), avec une solution de substances biologiques, le dispositif comprenant une chambre destinée à recevoir cette solution et dont le côté inférieur est formé par la surface (5), le côté supérieur par un couvercle (3) et les parois latérales par un joint d'étanchéité (6), le couvercle (3) pouvant être ouvert par basculement et pouvant être bloqué dans l'état fermé et étant constitué de deux parties dont la première est interchangeable sans moyens auxiliaires supplémentaires, renferme des perçages pour l'introduction de la solution, et comprend la surface de contact à la chambre ainsi qu'une rainure destinée au logement du joint d'étanchéité (6), et dont la seconde sert à recevoir et à bloquer la première partie et contient en outre des ressorts (10) qui régulent la pression d'application de la première partie sur le joint d'étanchéité (6).

2. Dispositif selon la revendication 1, **caractérisé en ce que** la première partie de couvercle, extractible, renferme des évidements et de préférence des perçages qui servent au logement des ressorts (10) de la seconde partie de couvercle.

3. Dispositif selon la revendication 2, **caractérisé en ce que** des pièces de pression (11) qui sont prévues sur la seconde partie de couvercle, et par lesquelles la force de ressort est transmise au joint d'étanchéité (6) par l'intermédiaire de la première partie de couvercle, sont fixées par des anneaux de caoutchouc dans les perçages de la première partie de couvercle.

4. Dispositif selon l'une des revendications précédentes, **caractérisé en ce que** la pression d'application du couvercle (3) sur le joint d'étanchéité (6), est limitée par une barrière mécanique.

5. Dispositif selon l'une des revendications précédentes, **caractérisé en ce que** la première partie du couvercle (3) renferme une cavité qui définit le volume de chambre (7) et la forme de la chambre.

6. Dispositif selon l'une des revendications précédentes, **caractérisé en ce que** le couvercle (3) comporte des filetages ou taraudages pour le montage de raccords de conduites.

7. Dispositif selon l'une des revendications précédentes, **caractérisé en ce que** des conduites tubulaires pour l'introduction et/ou le déplacement de l'échantillon sur la surface, sont rapportées sur le couvercle (3) .

8. Dispositif selon l'une des revendications précédentes, **caractérisé en ce que** la chambre peut être réfrigérée par des éléments Peltier.

9. Dispositif selon l'une des revendications précédentes, **caractérisé en ce que** la surface (5) est en verre et est de préférence un support d'objet tel que ceux utilisés également à des fins de microscopie.

10. Dispositif selon la revendication 1, **caractérisé en ce que** la chambre est de configuration rectangulaire.

11. Dispositif selon la revendication 1, **caractérisé en ce que** la chambre est de configuration ovale.

12. Dispositif selon la revendication 1, **caractérisé en ce que** la chambre est de configuration hexagonale.

13. Dispositif selon la revendication 1, **caractérisé en ce que** la chambre est de configuration ovale avec des effilements en en pointe formés sur les petits côtés.

14. Dispositif selon la revendication 1, **caractérisé en ce que** la chambre est de configuration ovale avec des excroissances formées sur les petits côtés.
